# EUROPEAN PATENT SPECIFICATION

(11) **EP 1 563 734 B1**
(45) Date of publication and mention of the grant of the patent: **17.12.2008**
(21) Application number: 05002011.4
(22) Date of filing: 01.02.2005
(51) Int. Cl.: A01N 43/90

(54) **Method of improving turfgrass quality**
Verfahren zum Verbessern von Rasenqualität
Procédé d'amélioration de la qualité du gazon

(30) Priority: 13.02.2004 US 778433
(43) Date of publication of application: 17.08.2005
(73) Proprietor: Bayer CropScience LP, Research Triangle Park, NC 27709 (US)
(72) Inventor: Lawrence, Norton H., Bethlehem PA 18017 (US); Hanrahan, Richard K., Englewood, NJ07631 (US); Spak, David R., New Holland PA 17557 (US)
(74) Representative: Nowak, Alexander

(56) References cited:
- WO-A-93/12175
- WO-A-96/32010
- WO-A-96/32011
- DE-A1- 2 511 077
- US-A- 5 352 729
- BEN-TAL, Y.; ROSENTHAL, I.: "Effect of Chloro-Aluminum-Phthalocyanine on the Growth or Lemna gibba G3" JOURNAL OF PLANT PHYSIOLOGY, vol. 135, no. 5, 1989, pages 635-636, XP009047422
- VAN HAERINGEN, C.J. ET AL.: "The Development of Solid Spectral Filters for the Regulation of Plant Growth" PHOTOCHEMISTRY AND PHOTOBIOLOGY, vol. 67, no. 4, 1998, pages 407-413, XP009047423

## Description

The present invention relates to methods of improving turfgrass quality on turfgrass and to compositions suitable therefor.

U.S. Patent 5,599,804 describes a method of combating fungi and enhancing turf quality in turfgrass by applying in specific ratios certain phthalocyanines in combination with phosphorous acid or an alkaline earth metal salt thereof or with certain monoester salts of phosphorous acid. U.S. Patent 5,643,852 describes a method of enhancing turf quality in turfgrass by applying in specific ratios certain phthalocyanines in combination with (i) phosphorous acid or an alkaline earth metal salt thereof or certain monoester salts of phosphorous acid and (ii) certain ethylene bisdithiocarbamate contact fungicides. U.S. Patent 5,336,661 describes a method of treating bentgrass and enhancing turf quality by applying in specific ratios (i) certain monoester salts of phosphorous acid and (ii) a metallic ethylene bisdithiocarbamate contact fungicide. This patent also describes a specific composition containing a combination of aluminum tris(O-ethylphosphonate) (fosetyl-al) and a manganese-zinc ethylene bisdithiocarbamate complex (mancozeb) used in a form (i.e., FORE fungicide) believed to have contained an unknown amount of the phthalocyanine compound Pigment Blue 15.

It has now unexpectedly been found that the quality of turfgrass can be improved by applying certain phthalocyanines in the substantial absence of the additional components mentioned above.

### SUMMARY OF THE INVENTION

The present invention provides a method of improving turfgrass quality comprising applying an effective amount of a composition containing a copper phthalocyanine to the turfgrass, with the proviso that the composition does not include an effective amount of phosphorous acid or a salt thereof or of monoalkyl esters of phosphorous acid or salts thereof and also does not include metallic ethylene bisdithiocarbamate contact fungicides or preferably no other fungicides.

### BRIEF DESCRIPTION OF THE DRAWINGS

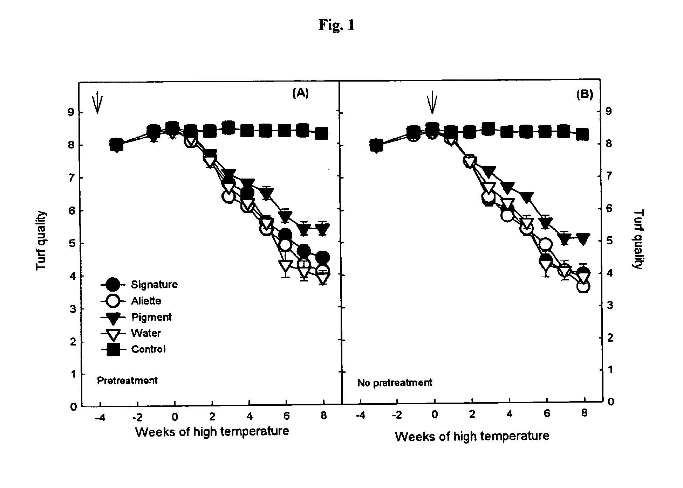

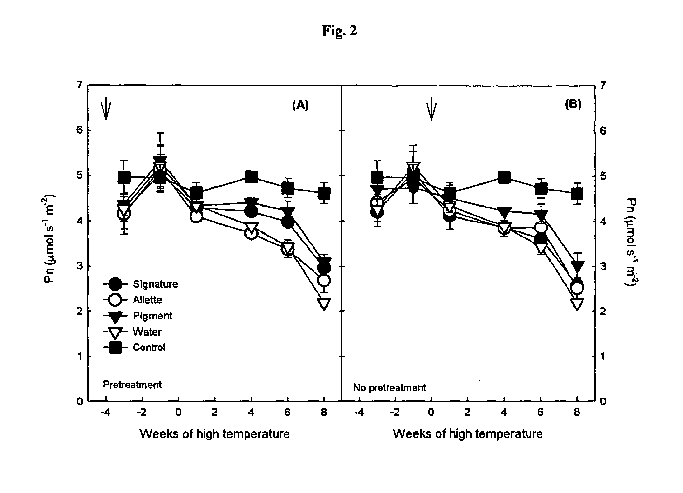

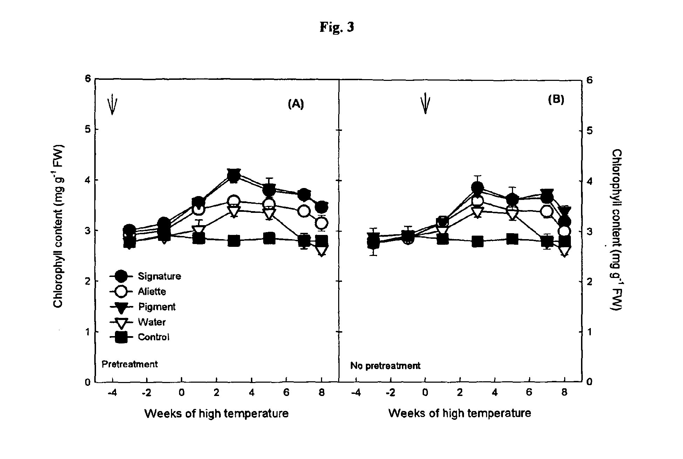

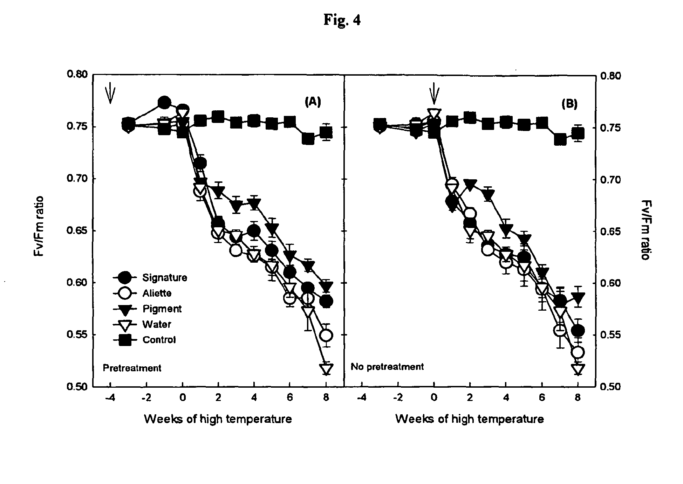

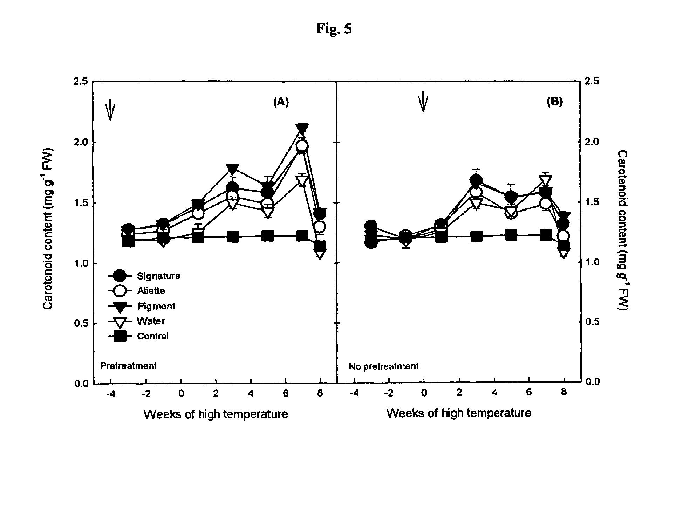

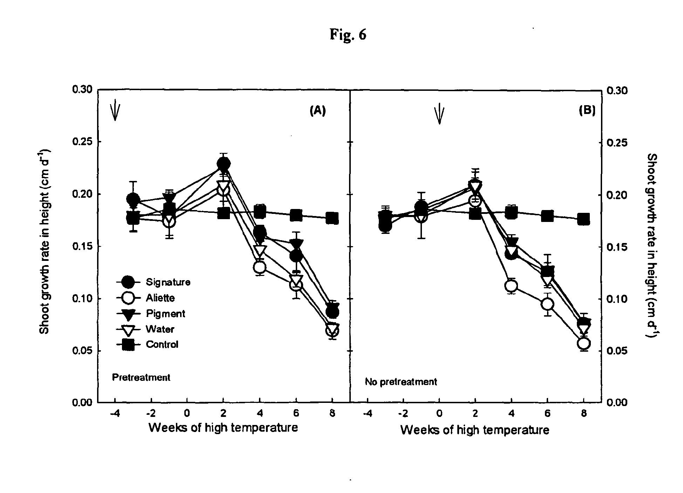

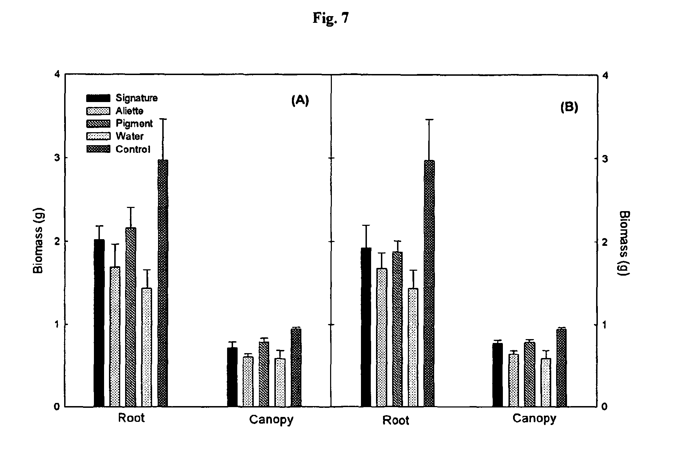

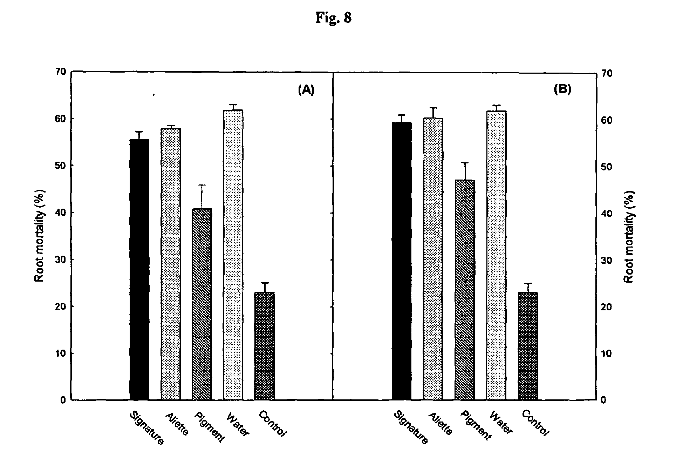

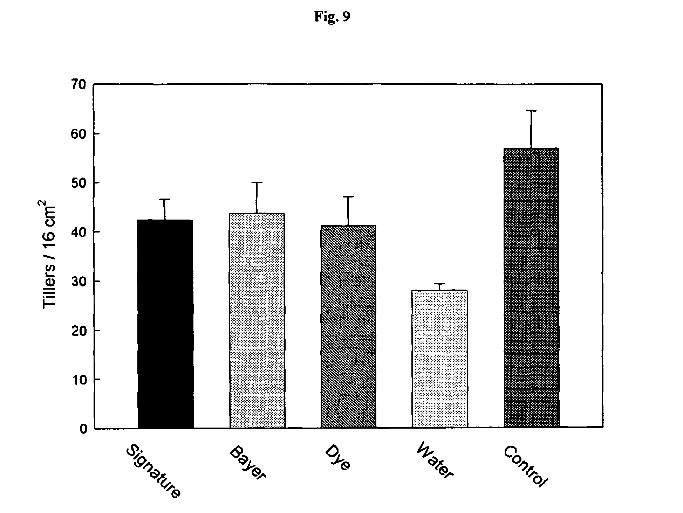

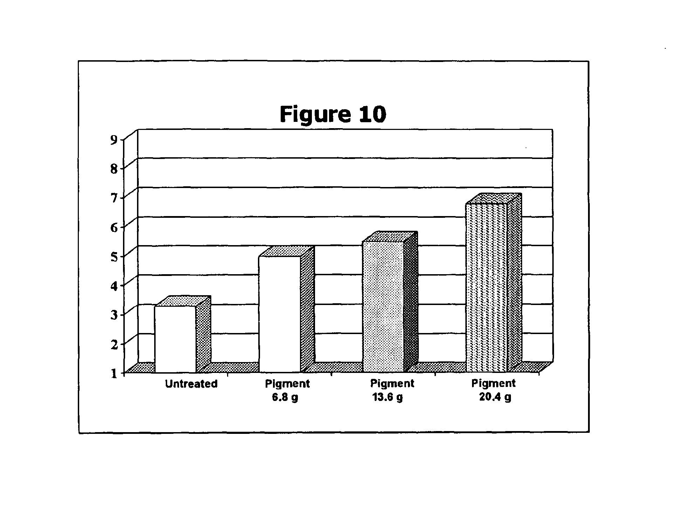

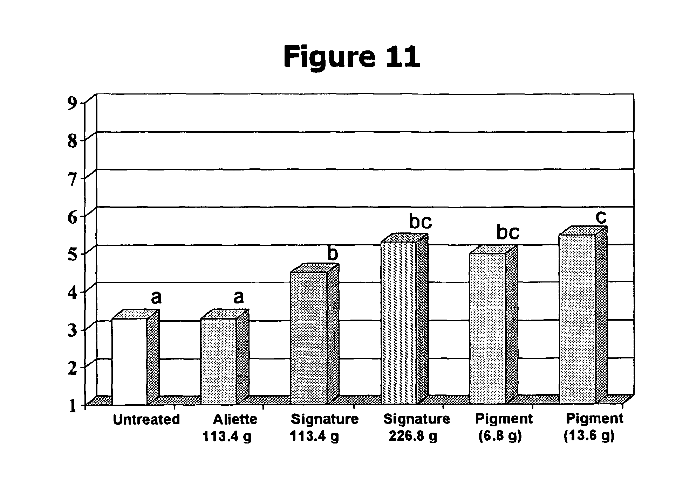

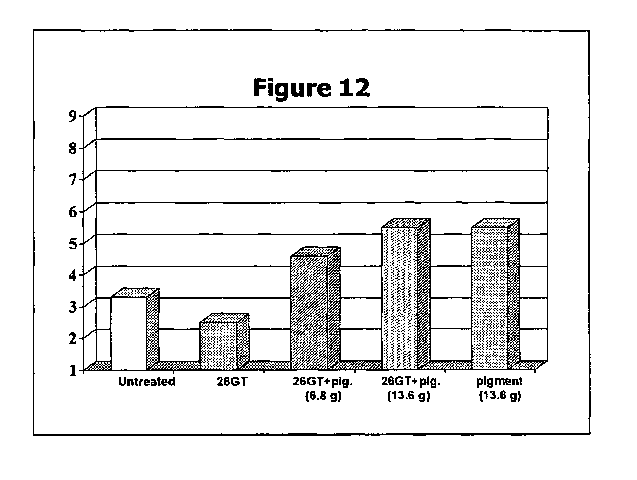

Figure 1 illustrates the effect of phthalocyanine and fungicide applications on Penncross creeping bentgrass turf quality at high temperature treatment. Figure 2 illustrates the effect of phthalocyanine and fungicide applications on net photosynthetic rate of Penncross creeping bentgrass at high temperature treatment. Figure 3 illustrates the effect of phthalocyanine and fungicide applications on chlorophyll content of Penncross creeping bentgrass at high temperature treatment. Figure 4 illustrates the effect of phthalocyanine and fungicide applications on chlorophyll photochemical efficiency of Penncross creeping bentgrass at high temperature treatment. Figure 5 illustrates the effect of phthalocyanine and fungicide applications on carotenoids content of Penncross creeping bentgrass at high temperature treatment. Figure 6 illustrates the effect of phthalocyanine and fungicide applications on shoot growth rate in height of Penncross creeping bentgrass at high temperature treatment. Figure 7 illustrates the effect of phthalocyanine and fungicide applications on root and canopy shoot biomass of Penncross creeping bentgrass at high temperature treatment. Figure 8 illustrates the effect of phthalocyanine and fungicide applications on root mortality of Penncross creeping bentgrass at high temperature treatment. Figure 9 illustrates the effect of phthalocyanine and fungicide application on tiller density of Penncross creeping bentgrass at high temperature treatment. In the figures by the term "Pigment" is meant Pigment Blue 15. Figure 10 illustrates the effect of phthalocyanine application on Penncross creeping bentgrass color. Figures 11 and 12 illustrate the effect of phthalocyanine and fungicide applications on the color of Penncross creeping bentgrass.

### DETAILED DESCRIPTION OF THE INVENTION

Suitable phthalocyanines for use according to the invention are copper phthalocyanines.

Suitable substituted copper phthalocyanines may be substituted from 1 to 4 times on each isoindole group independently. Examples of suitable substituents for the isoindole groups of copper phthalocyanine dyes include but are not limited to halogen, unsubstituted or substituted lower alkyl, lower alkoxy, alkylamino, alkylthio, ammonium, sulfonato, sulfonato alkyl, sulfate, phosphate, phosphonate, and carboxylate. The ionic or ionizable substituents can have as counterions the alkali metals, preferably lithium, sodium, or potassium, the alkaline earth metals, preferably beryllium, magnesium, calcium, strontium, and barium, and various ammonium ions. By the terms lower alkyl and lower alkoxy are generally meant alkyl groups of from 1 to 6 carbon atoms and alkoxy groups of from 1 to 6 carbon atoms.

Suitable copper phthalocyanines are commercially available and include but are not limited to Pigment Blue 16, Vat Blue 29, Pigment Blue 15, Heliogen Green GG, Ingrain Blue 14, Ingrain Blue 5, Ingrain Blue 1, Pigment Green 37, and Pigment Green 7. In one preferred embodiment, the copper phthalocyanine is Pigment Blue 15, also known as phthalocyanine blue.

The compositions used according to the invention do not include effective amounts of phosphorous acid, monoalkyl esters of phosphorous acid, or salts thereof. Examples of such compounds to be excluded or substantially excluded are (i) compounds of the formula [HP(OR)O₂)⁻]ₙ Mⁿ⁺ in which R is C₂-C₄ alkyl, M is an alkali metal, alkaline earth, or aluminum atom, and n is an integer of from 1 to 3 equal to the valence of M, or (ii) phosphorous acid or alkaline earth metal salts thereof.

Other compounds are also preferably excluded or substantially excluded from the present invention. For example, in one preferred embodiment, the compositions and methods of the invention do not include effective amounts of (i) phosphorous acid, monoalkyl esters of phosphorous acid, or salts thereof and (ii) metallic ethylene bisdithiocarbamate contact fungicides, especially manganese ethylene bisdithiocarbamate or manganese-zinc ethylene bisdithiocarbamate. In a second preferred embodiment, the compositions and methods of the invention do not include effective amounts of (i) phosphorous acid, monoalkyl esters of phosphorous acid, or salts thereof, (ii) the metallic ethylene bisdithiocarbamate contact fungicides mentioned above, and (iii) one or more other fungicides, particularly those selected from the group consisting of basic salts or hydroxides of copper (e.g., the oxychloride or oxysulphate), (tetrahydro)phthalimides (e.g., captan, captafol, or folpel), methyl (butylcarbamoyl)-2-benzimidazolecarbamate (benomyl), thiophanates such as dimethyl (1,2-phenylene)bis(iminocarbonothioyl)bis(carbamate) (thiophanate-methyl), tetrachloroisophthalonitrile (chlorothalonil), 3-(3,5-dichlorophenyl)-N-(1-methylethyl)-2,4-dioxo-1-imidazolidinecarboxamide (iprodione), 1-[2-(2,4-dichlorophenyl)4-propyl-1,3-dioxolan-2-yl methyl-1H-1,2,4-triazole (propiconazole), 1-(4-chlorophenoxy)-3,3-dimethyl-1(1H-1,2,4-triazol-1-yl)-2-butanone (triadimafon), 2- hydroxy-1,3,2-dioxaphospholanes, and β-hydroxy ethyl phosphites. In a third preferred embodiment, the compositions of the invention do not include effective amounts of the components (i) and (iii) mentioned above.

The compositions used according to the invention preferably consists of an effective amount of a copper phthalocyanine and more preferably consist of an effective amount of a copper phthalocyanine, at least one dispersant, at least one carrier, and, optionally, water. The compositions may in one embodiment contain the copper phthalocyanine and water with no carrier. The compositions of the invention may consist essentially of a copper phthalocyanine compound and water. The compositions may also consist of a copper phthalocyanine compound and water.

By "carrier", there is meant herein an organic or inorganic material, which can be natural or synthetic, and which is associated with the phthalocyanine and facilitates its application to the locus to be treated. This carrier is thus generally inert and should be agriculturally acceptable, especially on the contemplated or treated turfgrass. The carrier can be solid (e.g., clay, silicates, silica, resins, wax, fertilizers, and the like) or liquid (e.g., water, alcohols, ketones, oil solvents, saturated or unsaturated hydrocarbons, chlorinated hydrocarbons, liquefied petroleum gas, and the like).

Among the many optional additives suitable for use in compositions of the invention include surfactants and other ingredients, such as dispersants, stickers, antifoam agents, antifreezing agents, dyestuffs, thickeners, adhesives, protective colloids, penetrating agents, stabilizing agents, sequestering agents, antiflocculating agents, corrosion inhibitors, pigments (other than those contemplated as an active ingredient for purposes of the invention), and polymers.

More generally, the compositions of the invention can include all kinds of solid or liquid additives which are known in the art of crop protection and horticultural pest control treatments.

The surfactants can be of the emulsifying or wetting type and can be ionic or non-ionic. Possible surfactants are salts of polyacrylic or lignosulfonic acids; salts of phenolsulfonic or naphthalenesulfonic acids; polycondensates of ethylene oxide with fatty alcohols or fatty acids or fatty amines or substituted phenols (particularly alkylphenols or arylphenols); ester-salts of sulfosuccinic acids; taurine derivatives, such as alkyl taurates; phosphoric esters; or esters of alcohols or polyoxyethylated phenols. When the spraying vehicle is water, the use of at least one surfactant is generally required because the active ingredients are not water-soluble.

Dusting powders, granulates, solution, emulsifiable concentrates, emulsions, suspended concentrates and aerosols are also contemplated within the invention. The wettable powders according to the invention can be prepared in such a way that they contain from 1% to 95% by weight of the active material, and they normally contain, in addition to a solid support, from 0 to 5% by weight of a wetting agent, from 3 to 10% by weight of a dispersant and, when necessary, from 0 to 10% by weight of one or more stabilizers and/or other additives, such as penetration agents, adhesives or anti-clumping agents, colorants, etc. The compositions according to the invention can contain other ingredients, for example protective colloids, adhesives or thickeners, thixotropic agents, stabilizers or sequestrants, as well as other active materials known to have pesticidal properties, especially certain fungicides, acaricides, and insecticides.

The present invention can be practiced with all turfgrasses, including cool season turfgrasses and warm season turfgrasses. Examples of cool season turfgrasses are bluegrasses (*Poa spp.*)*,* such as Kentucky bluegrass (*Poa pratensis* L.), rough bluegrass *(Poa trivialis* L.), Canada bluegrass *(Poa compressa* L.), annual bluegrass *(Poa annua* L.), upland bluegrass (Poa *glaucantha Gaudin),* wood bluegrass *(Poa nemoralis* L.), and bulbous bluegrass (*Poa bulbosa* L.); the bentgrasses and redtop *(Agrostis spp.*), such as creeping bentgrass *(Agrostis palustris* Huds.), colonial bentgrass *(Agrostis tenuis* Sibth.), velvet bentgrass *(Agrostis canina* L.), South German Mixed Bentgrass *(Agrostis spp.* including *Agrostis tenius* Sibth., *Agrostis canina* L., and *Agrostis palustris* Huds.), and redtop *(Agrostis alba* L.); the fescues *(Festucu spp.*), such as red fescue *(Festuca rubra* L. spp. *rubra*), creeping fescue *(Festuca rubra* L.), chewings fescue (*Festuca rubra commutata* Gaud.), sheep fescue *(Festuca ovina* L.), hard fescue *(Festuca longifolia* Thuill.), hair fescue *(Festucu capillata* Lam.), tall fescue *(Festuca arundinacea* Schreb.), meadow fescue *(Festuca elanor* L.); the ryegrasses *(Lolium* spp.), such as annual ryegrass (*Lolium multiflorum* Lam.), perennial ryegrass *(Lolium perenne L.*), italian ryegrass *(Lolium multiflorum* Lam.); and the wheatgrasses *(Agropyron* spp..*),* such as fairway wheatgrass *(Agropyron cristatum* (L.) Gaertn.), crested wheatgrass *(Agropyron desertorum* (Fisch.) Schult.), and western wheatgrass *(Agropyron smithii* Rydb.). Other cool season turfgrasses include beachgrass *(Ammophila breviligulata* Fern.), smooth bromegrass *(Bromus inermis* Leyss.), cattails such as Timothy *(Phleum pratense* L.), sand cattail *(Phleum subulatum* L.), orchardgrass *(Dactylis glomerata* L.), weeping alkaligrass (*Puccinellia distans* (L.) Parl.) and crested dog's-tail *(Cynosurus cristatus* L.).

Examples of warm season turfgrasses include Bermudagrass (*Cynodon spp.* L. C. Rich), zoysiagrass *(Zoysia spp.* Willd.), St. Augustine grass (*Stenotaphrum secundatum* Walt Kuntze), centipedegrass *(Eremochloa ophiuroides* Munro Hack.), carpetgrass *(Axonopus affinis* Chase), Bahia grass *(Paspalum notatum* Flugge), Kikuyugrass *(Pennisetum clandestinum* Hochst. ex Chiov.), buffalo grass *(Buchloe dactyloids* (Nutt.) Engelm.), Blue gramma *(Bouteloua gracilis* (H.B.K.) Lag. ex Griffiths), seashore paspalum (*Paspalum vaginatum* Swartz) and sideoats grama *(Bouteloua curtipendula* (Michx. Torr.). Cool season turfgrasses are generally preferred for treatment according to the invention. More preferred is bluegrass, bentgrass and redtop, fescue, and ryegrass. Bentgrass is most preferred.

In general the rate of application at the locus is from 0.001 to 10 kilograms of a copper phthalocyanine per hectare (kg/ha), preferably from 0.01 to 2 kg/ha, more preferably from 0.1 to 1 kg/ha, most preferably from 0.2 to 0.8 kg/ha. The compositions of the invention are applied by known methods.

The following examples further illustrate details for the method of this invention.

### EXAMPLES

### EXAMPLE 1

The following test methods were used to compare the effectiveness of the method according to the invention with known methods. The following compositions were used in the experiments: Pigment Blue 15, also known as copper phthalocyanine, was used alone. A mixture of Pigment Blue 15 and fosetyl-al was used as the commercially available product Chipco® Signature^{™} fungicide from Bayer Environmental Science, Montvale, NJ. The compound fosetyl-al was used as Chipco® Aliette® WDG fungicide available from Bayer Environmental Science, Montvale NJ.

Seeds of "Penncross" creeping bentgrass were sown in polyvinyl chloride (PVC) tubes (10 cm in diameter and 20 cm in length) filled with coarse sand. Plants were kept in a growth chamber for 90 days before treatment stated to allow root and canopy establishment. The daily temperature in the growth chamber was 20/16°C, the photosynthetic photon flux density was 400 µmol m⁻² s⁻¹, and the photoperiod was 12 hours/day. Turf was mowed twice weekly at 4 mm with scissors, irrigated every other day until there was free drainage from the bottom of tubes, and fertilized weekly with 40 ml full-strength Hoagland's nutrient solution (Hoagland and Amon, 1950). Insecticide was applied to kill whitefly when necessary.

Two treatments were conducted in the experiment. A high temperature treatment was maintained at 35/30°C (day/night temperatures) and an optimum temperature treatment of 20/16°C was used as temperature control. Signature fungicide and Aliette fungicide were each applied to the foliage in each treatment biweekly at the rate of 4oz./1000 sq.ft.(1.27 ml/m²) for Signature fungicide and Aliette fungicide; and Pigment Blue 15 was applied to the foliage in each treatment biweekly at the rate of 6.92g/1000 sq.ft. (74.5 mg/m²) in order to roughly approximate the amount of Pigment Blue 15 being applied in each plot. Water alone was used as a non-fungicide control. (Treatments were applied only to plants at high temperature and not to control plants.) When treatments started, half of plants were sprayed 4 weeks before the high temperature treatment (i.e., as a pretreatment) and half of plants were sprayed at the same time of high soil temperature started (i.e., no pretreatment). Each treatment had 5 replications.

Measurements were made at 1 week after treatments were applied. Turf quality was visually rated at the scale from 0 to 9 according to the density, greenness, and uniformity of the grass, with 0 being the worst and 9 being the best.

Canopy net photosynthetic rate was measured as described below using a Li-6400 portable photosynthesis system (available from LiCor, Lincoln, NB).u

For determination of the biomass, samples of shoots and roots at the end of each experiment were cleaned and dried at 80°C in an oven for 72 hours. The dry weight of shoots and roots were used to indicate biomass of shoots and roots.

Chlorophyll and carotenoids were extracted by soaking 50 mg fresh shoots in 20 ml dimethyl sulfoxide (DMSO) in the dark for 72 h. Absorbance of each extractant at 663 nm, 645 nm, and 470 nm was used to determine chlorophyll content using the formula of Arnon (1949) and carotenoids content using the formula of Lichtenthaler and Wellburn (1983) Canopy photochemical efficiency was estimated by measuring chlorophyll fluorescence (Fv/Fm) using plant photosynthesis efficiency analyzer (available from ADC Bioscientific Limited, Herts, England).

Root mortality was measured using the method of Knievel (1973) with modification. Samples of 0.5 g clean fresh roots were incubated with 10 mL 0.6% 2,3,5-triphenyltetrazolium chloride (in 0.05 M phosphate buffer, pH 7.4) for 24 h in the dark at 30°C. Roots were then rinsed twice with deionized water. Formazan was extracted from roots twice with 95% ethanol at 70°C for 4 hour. The combined extractant from the two extractions was adjusted to a final volume of 20 mL with 95% ethanol. Absorbance at 490 nm was used to determine root mortality.

### Test Results

### A. Turf quality

Figure 1 illustrates the effect of fungicide application on Penncross creeping bentgrass turf quality at high temperature treatment. Data are shown as mean ± sd. Arrow indicates the date of first fungicide application.

The quality of plants at the control temperature was maintained at high level during the entire experimental period (Fig 1). Heat stress reduced turf quality beginning 2 weeks after high temperature. For the plants with pretreatment (Fig. 1), turf quality was highest at the application of Pigment Blue 15, followed by application of Signature fungicide and Aliette fungicide, water application showing the lowest turf quality. For the plants without pretreatment (Fig. 1B), application of Pigment Blue 15 showed higher turf quality than applications of Signature fungicide, Aliette fungicide, and water. Plants with pretreatment showed higher turf quality than those plants without pretreatment (cf. Figs. 1A and 1B).

### B. Net photosynthetic rate (Pn)

Figure 2 illustrates the effect of fungicide application on the net photosynthetic rate (Pn) of Penncross creeping bentgrass at high temperature treatment. Data are shown as mean ± sd. The arrow indicates the date of first fungicide application.

High temperature decreased canopy Pn beginning 4 weeks after heat stress (Figs. 2A and 2B). For the plants with fungicide pretreatment, Pn was higher with application of Pigment Blue 15 and Signature fungicide than with application of Aliette fungicide and water (Fig. 2A). For the plants without pretreatment, Pn was highest at phthalocyanine application, lowest at water application, and intermediate with application of Signature fungicide and Aliette fungicide (Fig. 2B). Pn was higher for plants with pretreatment than for those without pretreatment (Figs. 2A and 2B).

### C. Chlorophyll content

Figure 3 illustrates the effect of fungicide application on the chlorophyll content of Penncross creeping bentgrass at high temperature treatment. Data are shown as mean ± sd. The arrow indicates the date of first fungicide application.

Chlorophyll content in the fresh weight basis increased at high temperature treatment (Fig. 3A and B). For plants with pretreatment, chlorophyll content was highest with application of Signature fungicide and Pigment Blue 15, lowest at water application, and intermediate with application of Aliette fungicide (Fig. 3A). For plants without fungicide pretreatment, chlorophyll content was higher with application of Signature fungicide and Pigment Blue 15 than with application of Aliette fungicide (Fig. 3B). Chlorophyll content was higher for plants with pretreatment than for those without pretreatment (Figs. 3A and 3B).

### D. Photochemical efficiency (Fv/Fm ratio)

Figure 4 illustrates the effect of fungicide application on the chlorophyll photochemical efficiency (Fv/Fm) of Penncross creeping bentgrass at high temperature treatment. Data are shown as mean ± sd. The arrow indicates the date of first fungicide application.

Photochemical efficiency (Fv/Fm) declined beginning 1 week after high temperature treatment (Figs. 4A and 4B). For the plants with and without fungicide pretreatment, Fv/Fm was highest at application of Pigment Blue 15, followed by application of Signature fungicide, Aliette fungicide, and water. Fv/Fm was higher for the plants with pretreatment than for those without pretreatment.

### E. Carotenoids content

Figure 5 illustrates the effect of fungicide application on the carotenoids content of Penncross creeping bentgrass at high temperature treatment. Data are shown as mean ± sd. The arrow indicates the date of first fungicide application.

Carotenoids content increased in high temperature treatment (Figs. 5A and 5B). For the plants with or without pretreatment, carotenoids content was higher with application of Signature fungicide and Pigment Blue 15 than with application of Aliette fungicide and water (Fig. 5A). Carotenoids content was higher in plants with pretreatment than for those without pretreatment (Figs. 5A and 5B).

### F. Shoot growth rate in canopy height

Figure 6 illustrates the effect of fungicide application on shoot growth rate in height of Penncross creeping bentgrass at high temperature treatment. Data are shown as mean ± sd. The arrow indicates the date of first fungicide application.

Shoot growth rate in canopy height increased in 2 weeks of high temperature treatment and then declined beginning 4 weeks after high temperature treatment in plants with and without pretreatment (Figs. 6A and 6B). Shoot growth rate was higher with application of Signature fungicide and pigment than with application of Aliette fungicide and water for plants with and without pretreatment (Figs. 6A and 6B). Growth rate was higher in plants with fungicide pretreatment than for those without pretreatment (Figs. 6A and 6B).

### G. Final root and canopy biomass

Figure 7 illustrates the effect of fungicide application on root and canopy shoot biomass of Penncross creeping bentgrass at high temperature treatment. Data are shown as mean ± sd.

High temperature treatment decreased both roots and canopy biomass (Fig. 7). Application of fungicide relieved the decline of roots and canopy biomass induced by heat stress (Fig. 7). Both roots and canopy biomass were higher with application of Signature fungicide and Pigment Blue 15 than with application of Aliette fungicide and water for plants with and without fungicide pretreatment (Figs. 7A and 7B). Plants with fungicide pretreatment had higher roots and canopy biomass than for those without pretreatment (Figs. 7A and 7B).

### H. Root mortality

Figure 8 illustrates the effect of fungicide application on root mortality of Penncross creeping bentgrass at high temperature treatment. Data are shown as mean ± sd.

Root mortality was increased by high temperature treatment (Fig. 8). Fungicide application reduced the increase of root mortality. Application of Pigment Blue 15 produced lower root mortality than application of Signature fungicide and Aliette fungicide for plants with or without pretreatment (Fig. 8). Root mortality was lower for plants with pretreatment than for those without pretreatment (Figs. 8A and 8B).

### I. Tiller density

Figure 9 illustrates the effect of fungicide application on tiller density of Penncross creeping bentgrass at high temperature treatment. Data are shown as mean ± sd.

High temperature decreased tiller density. Applications of Signature fungicide and Aliette fungicide inhibited the decrease of tiller density induced by heat stress. There was no significant difference among applications of Signature fungicide, Aliette fungicide, and Pigment Blue 15 (Fig. 9).

### EXAMPLE 2

Pigment Blue 15 was suspended in water and applied as a foliar spray to creeping bentgrass (variety Penncross) turf with a pressurized sprayer at a spray volume of 1.37 gallons/1000 sq.ft. (55.9 ml/m²) .Pigment Blue 15 was applied at rates of 6.8, 13.9, and 20.4 grams per 1000 sq.ft (73,150 and 220 mg/m²). Each treatment was replicated 4 times. An untreated plot was included and was also replicated four times. The average color of the bentgrass was visually evaluated at 6 weeks after treatment. Figure 1 displays the results. Color was evaluated on a qualitative scale from 1-9, with 9 being the highest quality and 1 the lowest quality. The color ratings with Pigment Blue 15 treatments were significantly different than the untreated check based on analysis of variance. Figure 10 shows the results of the trial.

### EXAMPLE 3

Fosetyl-Al (in the form of Aliette brand fungicide), Fosetyl-Al plus Pigment Blue 15 (in the form of Signature brand Aliette fungicide) and Pigment Blue 15 were suspended in water and applied as a foliar spray to creeping bentgrass (variety Penncross) turf with a pressurized sprayer at a spray volume of 1.37 gallons/1000 sq.ft (55.9 ml/m²). Treatments were applied at the following rates per :1000 sq.ft (92.9m²:)

| | |
|---|---|
| Aliette | 4oz.(113.4g) |
| Signature | 4oz.(113.4g) |
| Signature | 8oz.(226.8g) |
| Pigment | 6.8oz.(192.78g) |
| Pigment | (13.6g) |

At 6 weeks after treatment, the color ratings were presented below. The color rating with Aliette and the untreated check were not significantly different. Pigment Blue 15 and Signature treatments were significantly different than the untreated check based on analysis of variance. Figure 11 shows the results.

### EXAMPLE 4

The procedure of Example 2 was repeated using iprodione fungicide (in the form of 26 GT brand iprodione fungicide) at 4oz/1000 sq.ft.(1.27 ml/m²), iprodione at 4oz/1000 sq.ft.(1.27 ml/m²) plus Pigment Blue 15 at 6.8g/1000 sq.ft. (73 mg/m²), iprodione at 4oz/1000 sq.ft.(1.27 ml/m²) plus Pigment Blue 15 at 13.6g/1000sq.ft. (146mg/m²) and Pigment Blue 15 at 13.6g/1000sq.ft. (146mg/m²). At 6 weeks after treatment, the color ratings were as follows. Turf treated with iprodione was not significantly different than the untreated check. Turf treated with iprodione plus Pigment Blue 15 at both rates and Pigment Blue 15 alone were significantly greener than the untreated. Figure 12 shows the results.

## Claims

1. A method of improving the density, uniformity and/or greenness of turfgrass comprising applying an effective amount of the composition containing a copper phthalocyanine to the turfgrass, with the provisos that
(i) the composition does not include an effective amount of phosphorous acid or a salt thereof or a monoalkyl ester of phosphorous acid or a salt thereof, and
(ii) the composition does not include an effective amount of metallic ethylene bisdithiocarbamate contact fungicides.

2. A method according to Claim 1 comprising applying an effective amount of the composition containing a copper phthalocyanine to the turfgrass with the provisos that
(i) the composition does not include an effective amount of phosphorous acid or a salt thereof or a monoalkyl ester of phosphorous acid or a salt thereof,
(ii) the composition does not include an effective amount of metallic ethylene bisdithiocarbamate contact fungicides, and
(iii) the composition does not include an effective amount of other fungicides.

3. A method according to Claim 1 comprising applying an effective amount of the composition containing a copper phthalocyanine to the turfgrass, with the provisos that
(i) the composition does not include an effective amount of phosphorous acid or a salt thereof or a monoalkyl ester of phosphorous acid or a salt thereof, and
(ii) the composition does not include an effective amount of other fungicides.

4. A method according to any of claims 1 to 3, wherein the composition consists of a copper phthalocyanine.

5. A method according to any of claims 1 to 3, wherein the composition consists of a copper phthalocyanine, at least one dispersant, and at least one carrier.

## Patentansprüche

1. Verfahren zur Verbesserung der Dichte, Gleichförmigkeit und/oder grünen Farbe von Rasen, umfassend das Aufbringen einer wirksamen Menge einer Kupferphthalocyanin enthaltenden Zusammensetzung auf den Rasen, mit der Maßgabe, dass
(i) die Zusammensetzung keine wirksame Menge phosphorige Säure oder eines Salzes davon oder eines Monoalkylesters von phosphoriger Säure oder eines Salzes davon enthält und
(ii) die Zusammensetzung keine wirksame Menge eines Metallethylenbisdithiocarbamat-Kontaktfungizids enthält.

2. Verfahren nach Anspruch 1, umfassend das Aufbringen einer wirksamen Menge einer Kupferphthalocyanin enthaltenden Zusammensetzung auf den Rasen, mit der Maßgabe, dass
(i) die Zusammensetzung keine wirksame Menge phosphorige Säure oder eines Salzes davon oder eines Monoalkylesters von phosphoriger Säure oder eines Salzes davon enthält,
(ii) die Zusammensetzung keine wirksame Menge eines Metallethylenbisdithiocarbamat-Kontaktfungizids enthält und
(iii) die Zusammensetzung keine wirksame Menge anderer Fungizide enthält.

3. Verfahren nach Anspruch 1, umfassend das Aufbringen einer wirksamen Menge einer Kupferphthalocyanin enthaltenden Zusammensetzung auf den Rasen, mit der Maßgabe, dass
(i) die Zusammensetzung keine wirksame Menge phosphorige Säure oder eines Salzes davon oder eines Monoalkylesters von phosphoriger Säure oder eines Salzes davon enthält und
(ii) die Zusammensetzung keine wirksame Menge anderer Fungizide enthält.

4. Verfahren nach einem der Ansprüche 1 bis 3, worin die Zusammensetzung aus einem Kupferphthalocyanin besteht.

5. Verfahren nach einem der Ansprüche 1 bis 3, worin die Zusammensetzung aus einem Kupferphthalocyanin, zumindest einem Dispergiermittel und zumindest einem Träger besteht.

## Revendications

1. Procédé d'amélioration de la densité, de l'uniformité et/ou de la couleur verte du gazon comprenant l'application d'une quantité efficace de la composition contenant une phtalocyanine de cuivre au gazon, à condition que
(i) la composition n'inclue pas une quantité efficace d'acide phosphoreux ou d'un sel de celui-ci ou d'un ester de monoalkyle d'acide phosphoreux ou d'un sel de celui-ci, et
(ii) la composition n'inclue pas une quantité efficace de fongicides de contact de bisdithiocarbamate d'éthylène à base de métaux.

2. Procédé selon la revendication 1 comprenant l'application d'une quantité efficace de la composition contenant une phtalocyanine de cuivre au gazon, à condition que
(i) la composition n'inclue pas une quantité efficace d'acide phosphoreux ou d'un sel de celui-ci ou d'un ester de monoalkyle d'acide phosphoreux ou d'un sel de celui-ci,
(ii) la composition n'inclue pas une quantité efficace de fongicides de contact de bisdithiocarbamate d'éthylène à base de métaux, et
(iii) la composition n'incluse pas une quantité efficace d'autres fongicides.

3. Procédé selon la revendication 1 comprenant l'application d'une quantité efficace de la composition contenant une phtalocyanine de cuivre au gazon, à condition que
(i) la composition n'inclue pas une quantité efficace d'acide phosphoreux ou d'un sel de celui-ci ou d'un ester de monoalkyle d'acide phosphoreux ou d'un sel de celui-ci, et
(ii) la composition n'inclue pas une quantité efficace d'autres fongicides.

4. Procédé selon l'une quelconque des revendications 1 à 3 dans lequel la composition est constituée d'une phtalocyanine de cuivre.

5. Procédé selon l'une quelconque des revendications 1 à 4 dans lequel la composition est constituée d'une phtalocyanine de cuivre, d'au moins un dispersant et d'au moins un support.
